# EUROPÄISCHE PATENTSCHRIFT

(11) **EP 3 891 014 B1**
(45) Veröffentlichungstag und Bekanntmachung des Hinweises auf die Patenterteilung: **04.11.2026**
(21) Anmeldenummer: 19817183.7
(22) Anmeldetag: 02.12.2019
(51) Int. Cl.: B60N 2/06, B60N 2/07

(54) **LÄNGSEINSTELLER FÜR EINEN FAHRZEUGSITZ, SOWIE FAHRZEUGSITZ**
LONGITUDINAL ADJUSTER FOR A VEHICLE SEAT, AND VEHICLE SEAT
DISPOSITIF DE RÉGLAGE EN LONGUEUR POUR UN SIÈGE DE VÉHICULE, AINSI QUE SIÈGE DE VÉHICULE

(30) Priorität: 07.12.2018 DE 102018131445; 12.02.2019 DE 102019103476
(43) Veröffentlichungstag der Anmeldung: 13.10.2021
(73) Patentinhaber: KEIPER Seating Mechanisms Co., Ltd., Shanghai 201315 (CN)
(72) Erfinder: SPRENGER, Erik, 42929 Wermelskirchen (DE)
(74) Vertreter: Kutzenberger Wolff & Partner
(86) Internationale Anmeldenummer: PCT/EP2019/083257
(87) Internationale Veröffentlichungsnummer: WO 2020/114946

(56) Entgegenhaltungen:
- WO-A1-2019/038455
- DE-A1- 10 062 217
- DE-A1- 102016 224 512
- DE-A1- 102016 224 514
- DE-A1- 102017 101 996
- DE-B4- 19 860 910
- DE-C1- 19 617 877

## Beschreibung

Die Erfindung betrifft einen Längseinsteller für einen Fahrzeugsitz, insbesondere Kraftfahrzeugsitz, mit zumindest einem Schienenpaar, das eine mit dem Fahrzeugsitz verbindbare Sitzschiene und eine mit einem Fahrzeugboden verbindbare Bodenschiene, an der die Sitzschiene entlang einer Längsrichtung verschiebbar geführt ist, aufweist, wobei der Längseinsteller eine Antriebseinrichtung zum Verstellen der Sitzschiene entlang der Längsrichtung relativ zu der Bodenschiene aufweist, wobei die Antriebsvorrichtung eine zur Bodenschiene oder zur Sitzschiene fixierte Spindel, eine an der Spindel über einen Gewindeeingriff gelagerte, drehbare Spindelmutter, und einen mit der Spindelmutter wirkverbundenen Elektromotor zum Antreiben der Spindelmutter aufweist, wobei eine abtriebsseitige Ausgangswelle des Elektromotors parallel zur Spindel orientiert ist. Die Erfindung betrifft ferner einen Fahrzeugsitz.

### Stand der Technik

Aus der DE 10 2017 101 996 A1 und der DE 298 14 626 U1 sind beispielhafte Längseinstellvorrichtungen für Fahrzeugsitze bekannt. Bei diesen wird ein Antriebsmoment eines gemeinsamen Motors zwei Antriebseinrichtungen über eine quer zu den beiden Schienenpaaren verlaufende Welle zugeleitet. Dabei befindet sich der Motor typischerweise zwischen den beiden Schienenpaaren. Die Welle befindet sich in einem Bereich unterhalb der Mitte des Fahrzeugsitzes, die quer zu den beiden Schienenpaaren verläuft. Die Welle ist dabei den beiden Sitzschienen zugeordnet, so dass die Welle und der Motor relativ zum Sitzgestell ihre Positionen nicht verändern, wohl aber relativ zu den Bodenschienen. Eine derartige Längseinstellvorrichtung für Fahrzeugsitze ist ebenfalls aus der US 5 273 242 A bekannt.

Eine derartige Konstruktion erfordert ausreichend Bauraum unter dem Sitzteil. Dieser Bauraum kann für zukünftige Weiterentwicklungen des Fahrzeugsitzes oder des Fahrzeuges selbst benötigt werden. Beispielsweise kann es in elektrisch betrieben Kraftfahrzeugen zukünftig erforderlich sein, dass dieser Bauraum zur Unterbringung von Batterien und/oder Akkumulatoren benötigt wird.

Im Stand der Technik ist aus der DE 198 60 910 B4 ein Antrieb für einen Längseinsteller eines Fahrzeugsitzes bekannt, bei dem der Längseinsteller zwei Schienenpaare mit jeweils einem Antriebsmotor aufweist, wobei die beiden Antriebsmotoren jeweils in einen Zwischenraum zwischen dem entsprechenden Schienenpaar hineinragend angeordnet sind.

Aus der DE 10 2016 224 512 A1 ist eine Fahrzeugsitzanordnung bekannt, umfassend ein Sitzgestell und zumindest ein Schienenpaar, das eine mit dem Sitzgestell verbundene Sitzschiene und eine mit einem Fahrzeugboden zu verbindende Bodenschiene, an der die Sitzschiene entlang einer Längsrichtung verschiebbar geführt ist, aufweist. Eine Antriebseinrichtung dient zum Verstellen der Sitzschiene entlang der Längsrichtung zu der Bodenschiene und weist eine Spindel, eine an der Spindel über einen Gewindeeingriff gelagerte, drehbare Spindelmutter, eine mit der Spindelmutter wirkverbundene Getriebeeinheit und einen Elektromotor zum Antreiben der Spindelmutter über die Getriebeeinheit auf. Dabei ist vorgesehen, dass die Spindel an der Sitzschiene und die Spindelmutter und die Getriebeeinheit an der Bodenschiene angeordnet sind. Der Antriebsmotor ist hierbei vollständig unterhalb der Bodenschiene angeordnet und ist in einer in einem Fahrzeugboden vorzusehenden Ausnehmung aufnehmbar.

Aus der DE 10 2016 224 514 A1 ist ein Längseinsteller bekannt, mit einem koaxial auf einer Spindel gelagerten Antriebsmotor, welcher vollständig in einem zwischen einer Sitzschiene und einer Bodenschiene gebildeten Hohlraum angeordnet ist.

Aus der DE 100 56 443 A1 ist ein Längseinsteller bekannt, dessen Antriebsmotor fluchtend zu einer in einer Sitzschiene gelagerten Spindel in einem Bereich vor der Sitzschiene angeordnet ist.

### Aufgabe

Der Erfindung liegt die Aufgabe zu Grunde, einen Längseinsteller eingangs genannter Art zu verbessern, insbesondere einen Längseinsteller mit einem unverbauten Zwischenraum zwischen einem ersten und einem zweiten Schienenpaar zu ermöglichen, sowie einen entsprechenden Fahrzeugsitz bereitzustellen.

### Lösung

Diese Aufgabe wird erfindungsgemäß gelöst durch einen Längseinsteller für einen Fahrzeugsitz, insbesondere Kraftfahrzeugsitz, mit zumindest einem Schienenpaar, das eine mit dem Fahrzeugsitz verbindbare Sitzschiene und eine mit einem Fahrzeugboden verbindbare Bodenschiene, an der die Sitzschiene entlang einer Längsrichtung verschiebbar geführt ist, aufweist, wobei der Längseinsteller eine Antriebseinrichtung zum Verstellen der Sitzschiene entlang der Längsrichtung relativ zu der Bodenschiene aufweist, wobei die Antriebsvorrichtung eine zur Bodenschiene oder zur Sitzschiene fixierte Spindel, eine an der Spindel über einen Gewindeeingriff gelagerte, drehbare Spindelmutter, und einen mit der Spindelmutter wirkverbundenen Elektromotor zum Antreiben der Spindelmutter aufweist, wobei eine abtriebsseitige Ausgangswelle des Elektromotors parallel zur Spindel orientiert ist, wobei die Sitzschiene oder die Bodenschiene eine Ausnehmung aufweist und der Elektromotor durch die Ausnehmung hindurch wenigstens teilweise in einem zwischen der Sitzschiene und der Bodenschiene gebildeten Hohlraum angeordnet ist.

Dadurch, dass die Sitzschiene oder die Bodenschiene eine Ausnehmung aufweist und der Elektromotor durch die Ausnehmung hindurch wenigstens teilweise in einem zwischen der Sitzschiene und der Bodenschiene gebildeten Hohlraum angeordnet ist, kann der Elektromotor derart durch die Ausnehmung hindurch teilweise in dem Hohlraum positioniert sein, dass eine möglichst geringe Bauhöhe, gemessen von einer Unterkante der dem Elektromotor gegenüberliegenden Bodenschiene und einer Oberkante des Elektromotors und/oder eines Getriebegehäuses oder einer Oberkante der dem Elektromotor gegenüberliegenden Sitzschiene und einer Unterkante des Elektromotors und/oder eines Getriebegehäuses, erzielbar ist.

Vorteilhafte Ausgestaltungen, welche einzeln oder in Kombination miteinander eingesetzt werden können, sind Gegenstand der Unteransprüche.

Der Elektromotor kann unter Einhaltung eines Abstandes zur Spindel in dem Hohlraum angeordnet sein. Der Abstand kann im Bereich von 0,1 bis 10 mm liegen. Der Abstand liegt bevorzugt im Bereich von 0,2 bis 5 mm.

Eine abtriebsseitige Ausgangswelle des Elektromotors kann parallel zur Längsrichtung orientiert sein. Eine Längserstreckung des Elektromotors kann parallel zur Längsrichtung orientiert sein. Eine Längserstreckung des Elektromotors kann insbesondere parallel zur Spindel orientiert sein.

Der Elektromotor kann die Spindelmutter mittels eines Zahnrads antreiben. Hierbei kann ein auf der Ausgangswelle angeordnetes Zahnrad mit einer Außenverzahnung der Spindelmutter in Zahneingriff sein. Durch entsprechende Dimensionierung des Zahnrades sowie der Spindelmutter sind entsprechende Übersetzungsverhältnisse oder Untersetzungsverhältnisse umsetzbar.

Der Elektromotor kann die Spindelmutter mittels eines Zahnriemens antreiben. Hierbei kann ein auf der Ausgangswelle angeordnetes Zahnrad mit einer Außenverzahnung der Spindelmutter über einen Zahnriemen verbunden sein. Mittels einer Schrägverzahnung ist ein optimaler Zahneingriff erzielbar, wodurch der Wirkungsgrad, das Geräuschverhalten sowie die Lebensdauer des Antriebs in vorteilhafter Weise erhöht sind. Ebenfalls kann bei einer entsprechenden Ausgestaltung des Zahnrads auf günstigere Materialien zurückgegriffen werden, was zudem die Produktionskosten reduziert.

Die Spindel kann an wenigstens einem von zwei ihrer gegenüberliegenden Enden mittels eines ersten Spindelhalters gehalten sein. Die Spindel kann an einem ersten Ende mittels eines ersten Spindelhalters gehalten sein. Die Spindel kann an einem zweiten Ende mittels eines zweiten Spindelhalters gehalten sein. Der erste Spindelhalter und der zweite Spindelhalter können unterschiedlich ausgestaltet sein.

Der erste Spindelhalter kann die Spindel seitlich formschlüssig halten. Der erste Spindelhalter kann derart ausgestaltet sein, dass er die Spindel in Vertikalrichtung nicht überragt. Der erste Spindelhalter kann an dem, von der Spindelmutter aus betrachtet, in Richtung des Elektromotors gelegenen ersten Ende der Spindel angeordnet sein. Eine mögliche Ausgestaltung des ersten Spindelhalters ist beispielsweise in der WO 2016/150 791 A1 beschrieben.

Der Längseinsteller kann zwei Schienenpaare aufweisen, denen jeweils eine gesonderte Antriebseinrichtung zugeordnet ist. Jedes Schienenpaar weist somit eine eigene Antriebseinrichtung auf, sodass die Schienenpaare durch (räumlich voneinander) getrennte Antriebseinrichtungen antreibbar sind. Eine Steuerungseinrichtung kann vorgesehen sein, um die Antriebseinrichtungen anzusteuern, sodass eine synchrone Verstellbewegung an den Schienenpaaren ausführbar ist. Ebenso ist es möglich durch eine entsprechende Aktivierung der Antriebseinrichtungen mittels der Steuerungseinrichtung, eine asynchrone Verstellbewegung an den Schienenpaaren auszuführen. Eine asynchrone Verstellbewegung der Schienenpaare kann beispielsweise zu einem Verschwenken oder Drehen eines auf dem Längseinsteller montierbaren Fahrzeugsitzes dienen. Eine mögliche Adaptierung des Längseinstellers zu einem drehbaren Fahrzeugsitz ist beispielsweise in der DE 10 2009 033 494 A1 beschrieben.

Die zugrundeliegende Aufgabe wird ferner erfindungsgemäß gelöst durch einen Fahrzeugsitz, insbesondere Kraftfahrzeugsitz, mit einem zuvor beschriebenen Längseinsteller.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Der Schutzbereich der Erfindung wird durch die beigefügten Patentansprüche definiert. Es zeigen:
- Fig. 1:: schematisch einen erfindungsgemäßen Fahrzeugsitz mit einem Längseinsteller gemäß eines ersten Ausführungsbeispiels,
- Fig. 2:: eine perspektivische Darstellung eines Schienenpaares eines Längseinstellers gemäß des ersten Ausführungsbeispiels,
- Fig. 3:: eine Rückansicht des Schienenpaares von Fig. 2,
- Fig. 4:: eine Seitenansicht des Schienenpaares von Fig. 2,
- Fig. 5:: einen Längsschnitt des Schienenpaares von Fig. 2 entlang der in Fig. 3 gezeigten Schnittlinie V-V, und
- Fig. 6:: einen der Darstellung von Fig. 5 entsprechenden Längsschnitt eines Schienenpaares eines Längseinstellers gemäß eines zweiten Ausführungsbeispiels.

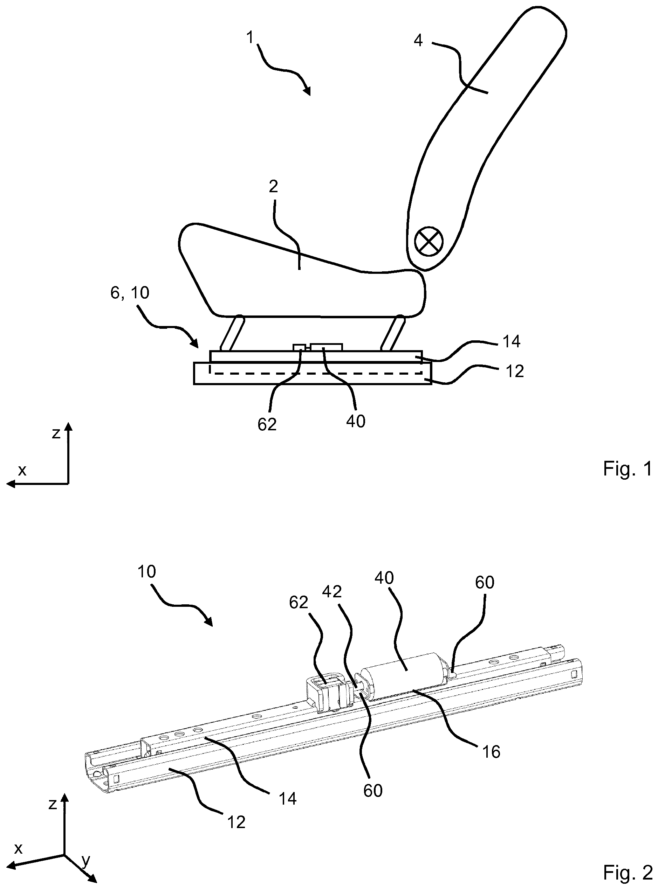

Ein in Fig. 1 schematisch dargestellter Fahrzeugsitz 1 ist nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines in dem Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrechtstehender Lehne 4 und wie üblich in Fahrtrichtung ausgerichtet ist. Ein erfindungsgemäßer Fahrzeugsitz 1 kann jedoch auch in abweichender Ausrichtung, beispielsweise quer zur Fahrtrichtung verbaut werden.

Der Fahrzeugsitz 1 weist ein Sitzteil 2 und eine relativ zum Sitzteil 2 in ihrer Neigung einstellbare und nach vorn in Richtung des Sitzteils 2 verschwenkbare Lehne 4 auf. Für die längsverschiebbare und längseinstellbare Anbringung des Fahrzeugsitzes 1 im Fahrzeug weist der Fahrzeugsitz 1 einen Längseinsteller 6 auf.

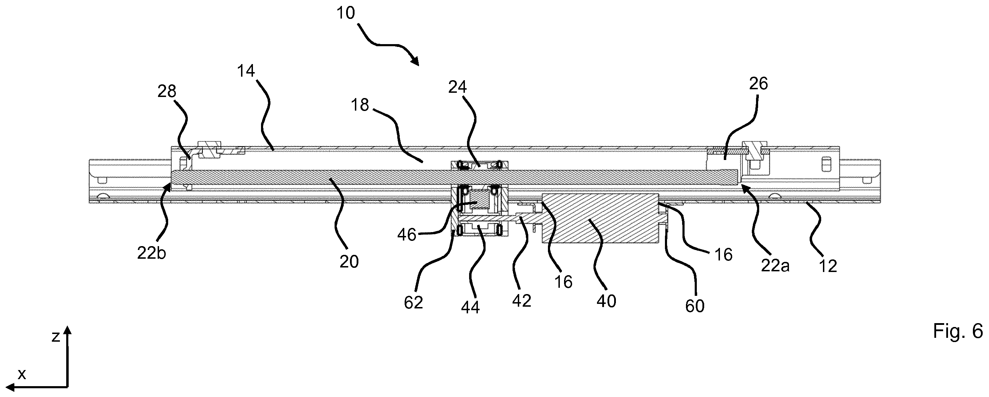

Der Längseinsteller 6 dient zur Längseinstellung, d.h. der Einstellung einer Sitzlängsposition, des Fahrzeugsitzes 1. Auf jeder Fahrzeugsitzseite weist der Längseinsteller 6 hierzu jeweils ein Schienenpaar 10 auf. Ein Schienenpaar 10 ist auf einer Tunnelseite und das andere Schienenpaar 10 auf einer Schwellerseite angeordnet. Die zwei Schienenpaare 10 des Längseinstellers 6 verlaufen parallel zueinander. Jedes Schienenpaar 10 weist eine mit einem Fahrzeugboden verbindbare Bodenschiene 12 und mittels derselben geführt eine mit dem Fahrzeugsitz 1 verbindbare Sitzschiene 14 auf. Die Sitzschiene 14 ist relativ zur Bodenschiene 12 entlang der Längsrichtung x verschiebbar geführt. Vorliegend ist ein Längseinsteller 6 gemäß eines ersten Ausführungsbeispiels dargestellt. Der Fahrzeugsitz 1 kann alternativ auf einem Längseinsteller 6 gemäß eines zweiten Ausführungsbeispiels, wie es in Fig. 6 gezeigt ist, montiert sein.

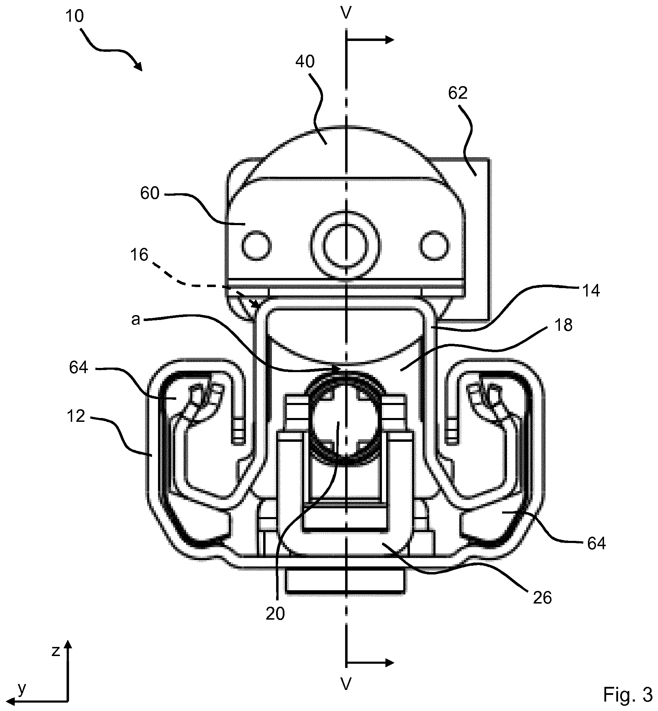

Die Figuren 2 bis 5 zeigen unterschiedliche Darstellungen und Ansichten eines Schienenpaars 10 des Längseinstellers 6 gemäß eines ersten Ausführungsbeispiels und sind nachfolgend gemeinsam beschrieben.

Die jeweilige Sitzschiene 14 und die jeweilige Bodenschiene 12 umgreifen einander wechselseitig unter Bildung eines Schienenprofils und sind relativ zueinander in Längsrichtung x beweglich, wobei zwischen der Sitzschiene 14 und der zugehörigen Bodenschiene 12 zur Verringerung der Reibung mehrere Wälzkörper, insbesondere in Form von Kugeln in einem Kugelkäfig 64, angeordnet sind.

Zur Einstellung des Längseinstellers 6 ist eine Antriebseinrichtung zum Verstellen der Sitzschiene 14 entlang der Längsrichtung x relativ zur Bodenschiene 12 vorgesehen. Die Antriebsvorrichtung weist eine in einem zwischen der Sitzschiene 14 und der Bodenschiene 12 gebildeten Hohlraum 18 angeordnete und relativ zur Bodenschiene 12 fixierte Spindel 20 auf. Die Spindel 20 ist feststehend angeordnet, wofür die Spindel 20 an ihren gegenüberliegenden Enden 22a, 22b mittels Spindelhaltern 26, 28 gehalten ist. Die Spindelhalter 26, 28 sind fest mit der Bodenschiene 12 und teilweise auch direkt formschlüssig mit der Fahrzeugstruktur verbunden. Das hintere, erste Ende 22a ist hierbei mittels des ersten Spindelhalters 26 und das vordere, zweite Ende 22b mittels des zweiten Spindelhalters 28 gehalten. Der erste Spindelhalter 26 hält die Spindel 20 seitlich formschlüssig, wobei der erste Spindelhalter 26 die Spindel 20 in Vertikalrichtung z nicht überragt. Der erste Spindelhalter 26 ist vorliegend an dem von der Spindelmutter 24 aus betrachtet in Richtung des Elektromotors 40 gelegenen hinteren, ersten Ende 22a der Spindel 20 angeordnet.

Der Fahrzeugsitz 1 ist elektromotorisch längseinstellbar, hierfür ist ein Elektromotor 40 an wenigstens einer der beiden Schienenpaare 10, bevorzugt ist je ein Elektromotor 40 an jeder der beiden Schienenpaare 10, vorgesehen. Ferner weist die Antriebsvorrichtung eine an der Spindel 20 über einen Gewindeeingriff gelagerte, drehbare Spindelmutter 24 auf. Der Elektromotor 40 ist zum Antreiben der Spindelmutter 24 mit derselben wirkverbunden.

Die Sitzschiene 14 weist eine Ausnehmung 16 zur Aufnahme des Elektromotors 40 auf. Der Elektromotor 40 ist wenigstens teilweise durch die Ausnehmung 16 hindurch in den zwischen der Sitzschiene 14 und der Bodenschiene 12 gebildeten Hohlraum 18 eingeführt. Der Elektromotor 40 ist unter Einhaltung eines Abstandes a zur Spindel 20 in der Ausnehmung 16 der Sitzschiene 14 gehalten. Die Ausnehmung 16 ist bevorzugt in Querrichtung y betrachtet mittig in der Sitzschiene 14 angeordnet. Der Elektromotor 40 ist bevorzugt in Querrichtung y betrachtet mittig über der Sitzschiene 14 angeordnet.

Der Elektronmotor 40 ist mittels zweier Motorhalter 60 an der Sitzschiene 14 fixiert. Der Elektromotor 40 weist eine abtriebsseitige Ausgangswelle 42 auf, welche parallel zur Längsrichtung x, insbesondere parallel zur Spindel 20, orientiert ist. Eine Längserstreckung des Elektromotors 40 ist ebenfalls parallel zur Längsrichtung x, insbesondere parallel zur Spindel 20, orientiert. Die Ausgangswelle 42 ist bevorzugt in Vertikalrichtung z oberhalb der Spindel 20 angeordnet. Die Ausgangswelle 42 ist bevorzugt, in Querrichtung y betrachtet, mittig über der Spindel 20 angeordnet. Die Ausgangswelle 42 ragt axial wenigstens bis in ein Getriebegehäuse 62 hinein. Das Getriebegehäuse 62 ist vorliegend, in Längsrichtung x betrachtet, vor dem Elektromotor 40 angeordnet.

Die Spindelmutter 24 kann durch den Elektromotor 40 unmittelbar mittels eines Zahnrads 44 oder mittelbar mittels eines Zahnrads 44 in Verbindung mit einem Zahnriemen 46 antreibbar sein. Das Zahnrad 44 ist in dem Getriebegehäuse 62 in Vertikalrichtung z oberhalb der Spindelmutter 24 drehbar gelagert. Das Zahnrad 44 ist drehfest mit der Ausgangswelle 42 des Elektromotors 40 verbunden. Vorliegend befinden sich das Zahnrad 44 und die Spindelmutter 24 in keinem unmittelbaren Zahneingriff miteinander. Vorliegend ist zur Übertragung der Rotationsbewegung des Zahnrades 44 auf die Spindelmutter 24 ein Zahnriemen 46 vorgesehen.

Gemäß einer nicht dargestellten Abwandlung des erfindungsgemäßen Längseinstellers kann durch entsprechende Dimensionierung des Zahnrades 44 sowie der Spindelmutter 24 ein unmittelbarer Zahneingriff ermöglicht sein, wodurch hierbei ebenfalls ein entsprechendes Übersetzungsverhältnis oder Untersetzungsverhältnis umsetzbar sind.

Der Elektromotor 40 ist möglichst tief in dem Hohlraum 18 positioniert, so dass eine möglichst geringe Bauhöhe, gemessen von einer Unterkante der Bodenschiene 12 und einer Oberkante des Elektromotors 40 und/oder eines Getriebegehäuses 62, erzielt ist.

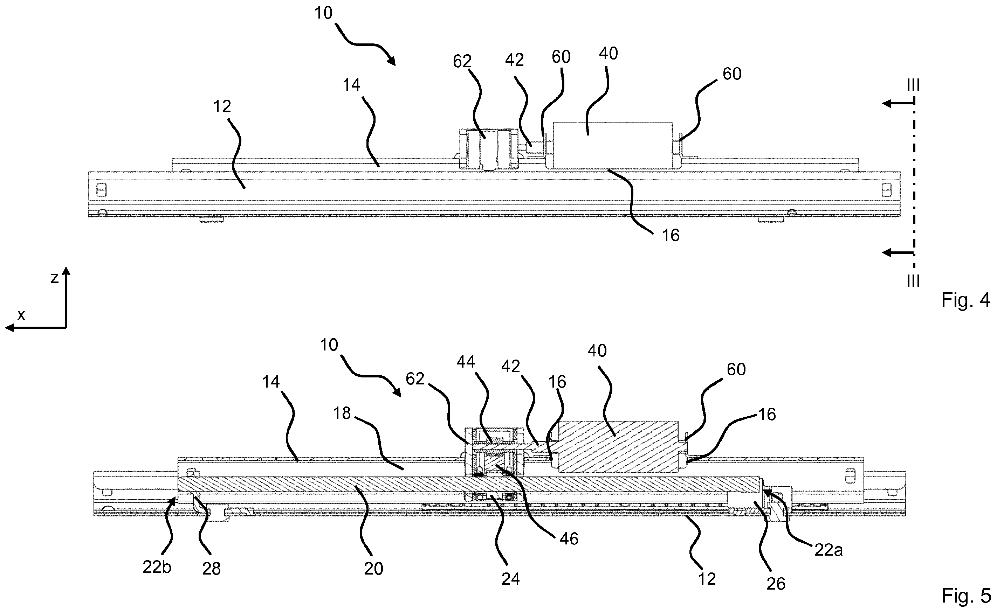

Fig. 6 zeigt einen der Darstellung von Fig. 5 entsprechenden Längsschnitt eines Schienenpaares 10 eines Längseinstellers 6 gemäß eines zweiten Ausführungsbeispiels. Der Längseinsteller 6 des zweiten Ausführungsbeispiels entspricht, soweit nicht explizit abweichend beschrieben, dem des ersten Ausführungsbeispiels.

Die jeweilige Sitzschiene 14 und die jeweilige Bodenschiene 12 umgreifen einander wechselseitig unter Bildung eines Schienenprofils und sind relativ zueinander in Längsrichtung x beweglich, wobei zwischen der Sitzschiene 14 und der zugehörigen Bodenschiene 12 zur Verringerung der Reibung mehrere Wälzkörper, insbesondere in Form von Kugeln in einem Kugelkäfig 64, angeordnet sind.

Zur Einstellung des Längseinstellers 6 ist eine Antriebseinrichtung zum Verstellen der Sitzschiene 14 entlang der Längsrichtung x relativ zur Bodenschiene 12 vorgesehen. Die Antriebsvorrichtung weist eine in einem zwischen der Sitzschiene 14 und der Bodenschiene 12 gebildeten Hohlraum 18 angeordnete und relativ zur Sitzschiene 14 fixierte Spindel 20 auf. Die Spindel 20 ist feststehend angeordnet, wofür die Spindel 20 an ihren gegenüberliegenden Enden 22a, 22b mittels Spindelhaltern 26, 28 gehalten ist. Die Spindelhalter 26, 28 sind fest mit der Sitzschiene 14 verbunden. Das hintere, erste Ende 22a ist hierbei mittels des ersten Spindelhalters 26 und das vordere, zweite Ende 22b mittels des zweiten Spindelhalters 28 gehalten. Der erste Spindelhalter 26 hält die Spindel 20 seitlich formschlüssig, wobei der erste Spindelhalter 26 die Spindel 20 in Vertikalrichtung z nicht überragt. Der erste Spindelhalter 26 ist vorliegend an dem von der Spindelmutter 24 aus betrachtet in Richtung des Elektromotors 40 gelegenen hinteren, ersten Ende 22a der Spindel 20 angeordnet.

Die Antriebsvorrichtung weist einen Elektromotor 40 an wenigstens einer der beiden Schienenpaare 10, bevorzugt je einen Elektromotor 40 an jeder der beiden Schienenpaare 10, auf. Ferner weist die Antriebsvorrichtung eine an der Spindel 20 über einen Gewindeeingriff gelagerte, drehbare Spindelmutter 24 auf. Der Elektromotor 40 ist zum Antreiben der Spindelmutter 24 mit derselben wirkverbunden.

Die Bodenschiene 12 weist eine Ausnehmung 16 zur teilweisen Aufnahme des Elektromotors 40 auf. Der Elektromotor 40 ist wenigstens teilweise durch die Ausnehmung 16 hindurch in den zwischen der Sitzschiene 14 und der Bodenschiene 12 gebildeten Hohlraum 18 eingeführt. Der Elektromotor 40 ist unter Einhaltung eines Abstandes a zur Spindel 20 in der Ausnehmung 16 der Bodenschiene 12 gehalten. Die Ausnehmung 16 ist bevorzugt in Querrichtung y betrachtet mittig in der Sitzschiene 14 angeordnet. Der Elektromotor 40 ist bevorzugt in Querrichtung y betrachtet mittig über der Sitzschiene 14 angeordnet.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen. Der Schutzbereich der Erfindung wird durch die beigefügten Patentansprüche definiert.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Längseinsteller
- 10: Schienenpaar
- 12: Bodenschiene
- 14: Sitzschiene
- 16: Ausnehmung
- 18: Hohlraum
- 20: Spindel
- 22a: erstes Ende
- 22b: zweites Ende
- 24: Spindelmutter
- 26: Spindelhalter
- 28: Spindelhalter
- 40: Elektromotor
- 42: Ausgangswelle
- 44: Zahnrad
- 46: Zahnriemen
- 60: Motorhalter
- 62: Getriebegehäuse
- 64: Kugelkäfig
- a: Abstand
- x: Längsrichtung
- y: Querrichtung
- z: Vertikalrichtung

## Patentansprüche

1. Längseinsteller (6) für einen Fahrzeugsitz (1), insbesondere Kraftfahrzeugsitz, mit zumindest einem Schienenpaar (10), das eine mit dem Fahrzeugsitz (1) verbindbare Sitzschiene (14) und eine mit einem Fahrzeugboden verbindbare Bodenschiene (12), an der die Sitzschiene (14) entlang einer Längsrichtung (x) verschiebbar geführt ist, aufweist, wobei der Längseinsteller (6) eine Antriebseinrichtung zum Verstellen der Sitzschiene (14) entlang der Längsrichtung (x) relativ zu der Bodenschiene (12) aufweist, wobei die Antriebsvorrichtung eine zur Bodenschiene (12) oder zur Sitzschiene (14) fixierte Spindel (20), eine an der Spindel (20) über einen Gewindeeingriff gelagerte, drehbare Spindelmutter (24), und einen mit der Spindelmutter (24) wirkverbundenen Elektromotor (40) zum Antreiben der Spindelmutter (24) aufweist, wobei eine abtriebsseitige Ausgangswelle (42) des Elektromotors (40) parallel zur Spindel (20) orientiert ist,
wobei
die Sitzschiene (14) oder die Bodenschiene (12) eine Ausnehmung (16) aufweist, **dadurch gekennzeichnet, dass** der Elektromotor (40) durch die Ausnehmung (16) hindurch wenigstens teilweise in einem zwischen der Sitzschiene (14) und der Bodenschiene (12) gebildeten Hohlraum (18) angeordnet ist.

2. Längseinsteller (6) gemäß Anspruch 1, wobei der Elektromotor (40) unter Einhaltung eines Abstandes (a) zur Spindel (20) in dem Hohlraum (18) angeordnet ist.

3. Längseinsteller (6) gemäß Anspruch 2, wobei der Abstand (a) im Bereich von 0,1 bis 10 mm liegt.

4. Längseinsteller (6) gemäß Anspruch 3, wobei der Abstand (a) im Bereich von 0,2 bis 5 mm liegt.

5. Längseinsteller (6) gemäß einem der Ansprüche 1 bis 4, wobei eine Längserstreckung des Elektromotors (40) parallel zur Längsrichtung (x) orientiert ist.

6. Längseinsteller (6) gemäß einem der Ansprüche 1 bis 5, wobei eine Längserstreckung des Elektromotors (40) parallel zur Spindel (20) orientiert ist.

7. Längseinsteller (6) gemäß einem der Ansprüche 1 bis 6, wobei der Elektromotor (40) die Spindelmutter (24) mittels eines Zahnrads (44) antreibt.

8. Längseinsteller (6) gemäß Anspruch 7, wobei das Zahnrad (44) auf der Ausgangswelle (42) angeordnet und mit einer Außenverzahnung der Spindelmutter (24) in Zahneingriff ist.

9. Längseinsteller (6) gemäß einem der Ansprüche 1 bis 6, wobei der Elektromotor (40) die Spindelmutter (24) mittels eines Zahnriemens (46) antreibt.

10. Längseinsteller (6) gemäß Anspruch 9, wobei ein auf der Ausgangswelle (42) angeordnetes Zahnrad (44) mit einer Außenverzahnung der Spindelmutter (24) über den Zahnriemen (46) verbunden ist.

11. Längseinsteller (6) gemäß einem der Ansprüche 8 oder 10, wobei das Zahnrad (44) und die Außenverzahnung der Spindelmutter (24) eine Schrägverzahnung aufweisen.

12. Längseinsteller (6) gemäß einem der Ansprüche 1 bis 11, wobei die Spindel (20) an wenigstens einem von zwei ihrer gegenüberliegenden Enden (22a, 22b) mittels eines ersten Spindelhalters (26, 28) gehalten ist.

13. Längseinsteller (6) gemäß Anspruch 12, wobei der erste Spindelhalter (26, 28) derart ausgestaltet ist, dass er die Spindel (20) in Vertikalrichtung (z) nicht überragt.

14. Längseinsteller (6) gemäß einem der Ansprüche 12 oder 13, wobei der erste Spindelhalter (26) an dem, von der Spindelmutter (24) aus betrachtet, in Richtung des Elektromotors (40) gelegenen ersten Ende (22a) der Spindel (20) angeordnet ist.

15. Fahrzeugsitz (1), insbesondere Kraftfahrzeugsitz, aufweisend einen Längseinsteller (6) gemäß einem der Ansprüche 1 bis 14.

## Claims

1. Longitudinal adjuster (6) for a vehicle seat (1), in particular a motor vehicle seat, comprising at least one pair of rails (10) comprising a seat rail (14) connectable to the vehicle seat (1) and a floor rail (12) connectable to a vehicle floor, on which the seat rail (14) is guided displaceably in a longitudinal direction (x), wherein the longitudinal adjuster (6) comprises a drive device for adjusting the seat rail (14) in the longitudinal direction (x) relative to the floor rail (12), wherein the drive device comprises a spindle (20) fixed to the floor rail (12) or to the seat rail (14), a rotatable spindle nut (24) mounted on the spindle (20) via a threaded engagement, and an electric motor (40) operatively connected to the spindle nut (24) for driving the spindle nut (24), wherein an output-side output shaft (42) of the electric motor (40) is oriented parallel to the spindle (20), wherein the seat rail (14) or the floor rail (12) has a recess (16), **characterized in that** the electric motor (40) is arranged, through the recess (16), at least partially in a cavity (18) formed between the seat rail (14) and the floor rail (12).

2. Longitudinal adjuster (6) according to claim 1, wherein the electric motor (40) is arranged in the cavity (18) while maintaining a distance (a) from the spindle (20).

3. Longitudinal adjuster (6) according to claim 2, wherein the distance (a) is in the range of 0.1 to 10 mm.

4. Longitudinal adjuster (6) according to claim 3, wherein the distance (a) is in the range of 0.2 to 5 mm.

5. Longitudinal adjuster (6) according to any one of claims 1 to 4, wherein a longitudinal extension of the electric motor (40) is oriented parallel to the longitudinal direction (x).

6. Longitudinal adjuster (6) according to any one of claims 1 to 5, wherein a longitudinal extension of the electric motor (40) is oriented parallel to the spindle (20).

7. Longitudinal adjuster (6) according to any one of claims 1 to 6, wherein the electric motor (40) drives the spindle nut (24) by means of a gear wheel (44).

8. Longitudinal adjuster (6) according to claim 7, wherein the gear wheel (44) is arranged on the output shaft (42) and is in meshing engagement with an external toothing of the spindle nut (24).

9. Longitudinal adjuster (6) according to any one of claims 1 to 6, wherein the electric motor (40) drives the spindle nut (24) by means of a toothed belt (46).

10. Longitudinal adjuster (6) according to claim 9, wherein a gear wheel (44) arranged on the output shaft (42) is connected to an external toothing of the spindle nut (24) via the toothed belt (46).

11. Longitudinal adjuster (6) according to either claim 8 or claim 10, wherein the gear wheel (44) and the external toothing of the spindle nut (24) have a helical toothing.

12. Longitudinal adjuster (6) according to any one of claims 1 to 11, wherein the spindle (20) is held, at at least one of two mutually opposite ends (22a, 22b) thereof, by means of a first spindle holder (26, 28).

13. Longitudinal adjuster (6) according to claim 12, wherein the first spindle holder (26, 28) is configured such that it does not protrude beyond the spindle (20) in a vertical direction (z).

14. Longitudinal adjuster (6) according to either claim 12 or claim 13, wherein the first spindle holder (26) is arranged at the first end (22a) of the spindle (20) which, as viewed from the spindle nut (24), is located in the direction of the electric motor (40).

15. Vehicle seat (1), in particular a motor vehicle seat, comprising a longitudinal adjuster (6) according to any one of claims 1 to 14.

## Revendications

1. Dispositif de réglage longitudinal (6) pour un siège de véhicule (1), en particulier un siège de véhicule automobile, comprenant au moins une paire de glissières (10) comportant une glissière de siège (14) apte à être reliée au siège de véhicule (1) et une glissière de plancher (12) apte à être reliée à un plancher de véhicule, sur laquelle la glissière de siège (14) est guidée de manière coulissante selon une direction longitudinale (x), le dispositif de réglage longitudinal (6) comprenant un dispositif d'entraînement pour régler la glissière de siège (14) selon la direction longitudinale (x) par rapport à la glissière de plancher (12), le dispositif d'entraînement comprenant une broche filetée (20) fixée à la glissière de plancher (12) ou à la glissière de siège (14), un écrou de broche (24) rotatif monté sur la broche filetée (20) par l'intermédiaire d'un engagement fileté, et un moteur électrique (40) relié fonctionnellement à l'écrou de broche (24) pour entraîner l'écrou de broche (24), un arbre de sortie (42) côté sortie du moteur électrique (40) étant orienté parallèlement à la broche filetée (20), la glissière de siège (14) ou la glissière de plancher (12) présentant un évidement (16), **caractérisé en ce que** le moteur électrique (40) est disposé, à travers l'évidement (16), au moins partiellement dans une cavité (18) formée entre la glissière de siège (14) et la glissière de plancher (12).

2. Dispositif de réglage longitudinal (6) selon la revendication 1, dans lequel le moteur électrique (40) est disposé dans la cavité (18) en respectant une distance (a) par rapport à la broche filetée (20).

3. Dispositif de réglage longitudinal (6) selon la revendication 2, dans lequel la distance (a) se situe dans la plage de 0,1 à 10 mm.

4. Dispositif de réglage longitudinal (6) selon la revendication 3, dans lequel la distance (a) se situe dans la plage de 0,2 à 5 mm.

5. Dispositif de réglage longitudinal (6) selon l'une quelconque des revendications 1 à 4, dans lequel une extension longitudinale du moteur électrique (40) est orientée parallèlement à la direction longitudinale (x).

6. Dispositif de réglage longitudinal (6) selon l'une quelconque des revendications 1 à 5, dans lequel une extension longitudinale du moteur électrique (40) est orientée parallèlement à la broche filetée (20).

7. Dispositif de réglage longitudinal (6) selon l'une quelconque des revendications 1 à 6, dans lequel le moteur électrique (40) entraîne l'écrou de broche (24) au moyen d'une roue dentée (44).

8. Dispositif de réglage longitudinal (6) selon la revendication 7, dans lequel la roue dentée (44) est disposée sur l'arbre de sortie (42) et engrène avec une denture extérieure de l'écrou de broche (24).

9. Dispositif de réglage longitudinal (6) selon l'une quelconque des revendications 1 à 6, dans lequel le moteur électrique (40) entraîne l'écrou de broche (24) au moyen d'une courroie dentée (46).

10. Dispositif de réglage longitudinal (6) selon la revendication 9, dans lequel une roue dentée (44) disposée sur l'arbre de sortie (42) est reliée à une denture extérieure de l'écrou de broche (24) par l'intermédiaire de la courroie dentée (46).

11. Dispositif de réglage longitudinal (6) selon l'une des revendications 8 ou 10, dans lequel la roue dentée (44) et la denture extérieure de l'écrou de broche (24) présentent une denture hélicoïdale.

12. Dispositif de réglage longitudinal (6) selon l'une quelconque des revendications 1 à 11, dans lequel la broche filetée (20) est maintenue, au niveau d'au moins une de ses deux extrémités opposées (22a, 22b), au moyen d'un premier support de broche (26, 28).

13. Dispositif de réglage longitudinal (6) selon la revendication 12, dans lequel le premier support de broche (26, 28) est configuré de telle sorte qu'il ne dépasse pas la broche filetée (20) selon une direction verticale (z).

14. Dispositif de réglage longitudinal (6) selon l'une des revendications 12 ou 13, dans lequel le premier support de broche (26) est disposé au niveau de la première extrémité (22a) de la broche filetée (20) qui, vue depuis l'écrou de broche (24), est située en direction du moteur électrique (40).

15. Siège de véhicule (1), en particulier siège de véhicule automobile, comprenant un dispositif de réglage longitudinal (6) selon l'une quelconque des revendications 1 à 14.
